# EUROPÄISCHE PATENTSCHRIFT

(11) **EP 3 074 610 B1**
(45) Veröffentlichungstag und Bekanntmachung des Hinweises auf die Patenterteilung: **14.11.2018**
(21) Anmeldenummer: 15706178.9
(22) Anmeldetag: 12.02.2015
(51) Int. Cl.: F01D 5/02, F01D 9/04, F01D 25/24, F02C 3/04

(54) **VERFAHREN ZUM BETRIEB EINER GASTURBINE BEI AKTIVER HYDRAULISCHER SPALTEINSTELLUNG**
METHOD FOR THE OPERATION OF A GAS TURBINE DURING ACTIVE HYDRAULIC GAP ADJUSTMENT
PROCÉDÉ POUR FAIRE FONCTIONNER UNE TURBINE À GAZ PENDANT RÉGLAGE ACTIF DE L'ÉCARTEMENT HYDRAULIQUE

(30) Priorität: 25.02.2014 DE 102014203318
(43) Veröffentlichungstag der Anmeldung: 05.10.2016
(73) Patentinhaber: Siemens Aktiengesellschaft, 80333 München (DE)
(72) Erfinder: LARSON, Marco, 45476 Mülheim (DE); SAVILIUS, Nicolas, 45359 Essen (DE)
(86) Internationale Anmeldenummer: PCT/EP2015/052909
(87) Internationale Veröffentlichungsnummer: WO 2015/128193

(56) Entgegenhaltungen:
- DE-A1-102012 213 016
- US-A1- 2010 247 283
- US-A1- 2010 303 612
- US-A1- 2012 177 483

## Beschreibung

Die vorliegende Erfindung betrifft ein Verfahren zum Betreiben einer stationären Gasturbine bei Teillast sowie bei aktiver hydraulischer Spalteinstellung, sowie eine derartige Gasturbine, die dazu ausgebildet ist, ein solches Verfahren anzuwenden.

Um Gasturbinen mit einem verbesserten Wirkungsgrad bzw. zur Leistungssteigerung insbesondere während oder auch nach dem Hochfahren betreiben zu können, ist es vorteilhaft, den Gasturbinenläufer entgegen der Hauptströmungsrichtung in der Gasturbine zu verschieben. Hierzu sehen Gasturbinen bevorzugt Mittel für eine hydraulische Spalteinstellung vor, die den Gasturbinenläufer derart zu verschieben erlauben, dass zwischen den Turbinenschaufelspitzen und der Gehäuseinnenwand der Entspannungsturbine ein geringerer, sowie zwischen den Verdichterschaufelspitzen und der Gehäuseinnenwand des Verdichters ein entsprechend größerer Spaltabstand eingestellt wird. Typischerweise sind aufgrund der Geometrie solcher Gasturbinen die dabei auftretenden Verluste im Verdichter geringer, als die Leistungssteigerung in der Entspannungsturbine aufgrund der Verringerung des Spaltabstands.

Eine derartige Verstellung des Gasturbinenläufers darf normalerweise nur bei ausreichend durchwärmter Gasturbine erfolgen. Anderenfalls ist mit einer unerwünschten zeitlichen Veränderung der Abstände zwischen den Schaufelspitzen und der Gehäuseinnenwand zu rechnen, wodurch die Gasturbine auch Schaden nehmen kann. Die Mittel für eine Spalteinstellung sind hierbei typischerweise als hydraulische Verstellmittel im Bereich der Axialanschläge ausgeführt, und sie erlauben eine weggenaue Verschiebung über hydraulische Kolben im Bereich der Haupt- und Nebenspur im Axiallager. Die Mittel für die hydraulische Spalteinstellung umfassen neben diesen hydraulischen Verstellmitteln zusätzlich auch noch geeignete Regel- bzw. Steuermittel, über welche eine gewünschte Einstellung des Spaltabstands vorgenommen werden kann.

Aufgrund der Einstellung durch die Mittel für die hydraulische Spalteinstellung kann die Entspannungsturbine effizienter arbeiten und damit eine verbesserte Umsetzung von thermischer Energie in mechanische Energie erreichen. Demzufolge sinkt die Turbinenaustrittstemperatur des Abgases bei konstanter Turbineneintrittstemperatur. Würde nun die Gasturbine auf eine konstante Turbinenaustrittstemperatur geregelt, müsste im Umkehrschluss eine Erhöhung der Turbineneintrittstemperatur erfolgen, soweit eine Spalteinstellung vorgenommen wird bzw. wurde.

Bei einem Betrieb bei Nennlast wäre so eine Überfeuerung der Gasturbine die Folge wodurch mitunter Schäden an den ersten Schaufelreihen der Entspannungsturbine auftreten könnten. Um solche Schäden zu verhindern, wird vor dem Betreiben der Mittel für eine hydraulische Spalteinstellung stets der Betrieb der Gasturbine mittels einer Abgastemperaturregelung (ATK-Regelung) derart eingestellt, dass die Turbinenaustrittstemperatur verringert wird. Eine derartige Einstellung erfolgt im Normalfall über die Regulierung der Brennstoffmenge, die dem Brenner zugeführt wird, wodurch gewährleistet werden kann, dass die zulässige Turbineneintrittstemperatur nicht überschritten wird.

Die ATK-Regelung sorgt insofern dafür, dass die Turbineneintrittstemperatur möglichst gering eingestellt ist, um somit die Materialbeanspruchung insbesondere im Bereich der ersten Turbinenstufen so gering wie möglich zu halten. Andererseits dient die ATK-Regelung auch dazu, eine maximal mögliche Turbineneintrittstemperatur auszunutzen, um so einen möglichst hohen Gasturbinenwirkungsgrad zu erzielen.

Nachteilig aus diesen aus dem Stand der Technik bekannten Betriebsverfahren ist jedoch, dass vor allem bei Teillast eine ATK-geregelte Verminderung der Turbinenaustrittstemperatur auch gleichzeitig zu einer unerwünschten Verminderung des Wirkungsgrads der Gasturbine führt. Vor allem während des Hochfahrens einer Gasturbine, währenddessen ein Teillastbetrieb vorliegt, kann so bspw. nicht das vollständige Gasturbinenpotential und der volle Wirkungsgrad ausgeschöpft werden.

Insofern stellt es sich als technisch erforderlich dar, ein weitergehendes Verfahren vorzuschlagen, welches die aus dem Stand der Technik bekannten Nachteile vermeiden bzw. verringern kann. Es soll also ein Betriebsverfahren vorgeschlagen werden, welches bei Betrieb der Mittel für die hydraulische Spalteinstellung gleichzeitig einen verbesserten Wirkungsgrad ermöglichen kann.

In den Dokumenten DE102012213016 A1, US2010/0247283 A1 und US2010/0303612 A1 werden Verfahren und Systeme für die Spalteinstellung dargestellt.

Diese der Erfindung zugrundeliegende Aufgabe wird gelöst durch ein Verfahren gemäß Anspruch 1, sowie eine stationäre Gasturbine gemäß Anspruch 7.

Insbesondere wird diese der Erfindung zugrundeliegende Aufgabe gelöst durch ein Verfahren zum Betreiben einer stationären Gasturbine bei Teillast mit wenigstens einem Verdichter, wenigstens einer Entspannungsturbine und einer mit wenigstens einem Brenner versehenen Brennkammer, welche Gasturbine fernerhin Mittel für eine hydraulische Spalteinstellung umfasst, wobei das Verfahren folgende Schritte aufweist:
- Betreiben der Gasturbine in Teillast;
- Betreiben der Mittel für eine hydraulische Spalteinstellung;
- während des Betreibens der Mittel für die hydraulische Spalteinstellung Erhöhung der Brennstoffzufuhr an den Brenner unter Erhöhung der Temperatur der Verbrennungsgase, die an die Entspannungsturbine geführt werden, wobei insbesondere die Temperatur unterhalb einer vorbestimmten, oberen Temperaturgrenze für den Nennlastbetrieb liegt.

Weiterhin wird die der Erfindung zugrundeliegende Aufgabe gelöst durch eine stationäre Gasturbine mit wenigstens einem Verdichter, wenigstens einer Entspannungsturbine und einer mit wenigstens einem Brenner versehenen Brennkammer, welche Gasturbine fernerhin Mittel für eine hydraulische Spalteinstellung umfasst, wobei weiterhin eine Gasturbinenregelungseinheit umfasst ist, die dazu ausgebildet ist, die Gasturbine gemäß einem der vorhergehenden bzw. auch nachfolgend beschriebenen Verfahren zu betreiben.

An dieser Stelle ist anzumerken, dass der Betriebsbereich der Teillast vorliegend als ein unterhalb des Nennlastbetriebsbereiches liegender Betriebsbereich zu verstehen ist. Insbesondere betrifft der Teillastbereich den Lastbereich beim Hochfahren einer Gasturbine aus einem verhältnismäßig kälteren Betriebszustand vor Erreichen der Nenndrehzahl.

Weiter ist darauf hinzuweisen, dass ein Betrieb der Mittel für eine hydraulische Spalteinstellung als ein aktiver Verstellvorgang verstanden werden kann, welcher typischerweise als Spaltregelung erfolgt. Ebenfalls liegt ein Betrieb der Mittel aber auch bereits dann vor, wenn eine Spalteinstellung bei aktivierten Mitteln schon vorgenommen wurde, ohne dass jedoch diese Mittel deaktiviert worden wären. Bei einer solchen Regelung kann es also mitunter vorkommen, dass sich Betriebszustände einer Verstellung mit Betriebszuständen eines Wartebetriebs, während dessen keine Verstellung erfolgt, abwechseln. Der Betrieb der Mittel für eine hydraulische Spalteinstellung kann damit alle aktiven Betriebszustände umfassen, soweit keine technische Deaktivierung der Spaltregulierung vorgenommen wurde. In anderen Worten, erfordert der Betrieb der Mittel also nicht eine erfolgende Einstellung des Spaltabstands sondern liegt bereits dann vor, wenn die betreffenden Mittel aktiviert sind, eine Spalteinstellung also zeitlich unmittelbar vorgenommen werden könnte..

Weiter ist darauf hinzuweisen, dass der Begriff der Verbrennungsgase, die aus der Brennkammer ausströmenden Gase betrifft, bevor diese noch in die Entspannungsturbine eingeführt wurden. Die Temperatur der Verbrennungsgase betrifft also in erster Linie die Temperatur derjenigen Gase, welche die Turbineneintrittstemperatur bestimmen.

Die Turbineneintrittstemperatur kann ihrerseits wiederum aus der Turbinenaustrittstemperatur annähernd berechnet werden, unter Zugrundelegung von technischen Annahmen zum Temperaturabbau während des Durchtritts durch die Entspannungsturbine. Ein Maß für diese Turbineneintrittstemperatur kann somit die messbare Turbinenaustrittstemperatur sein.

Die vorliegende Erfindung schlägt also ein Verfahren bei Teillastbetrieb vor, bei welchem während des Betreibens der Mittel für eine hydraulische Spalteinstellung die Brennstoffzufuhr an den Brenner erhöht wird. Aufgrund dieser Erhöhung der Brennstoffzufuhr kommt es zu einer fetteren Verbrennung und damit zu einer Erhöhung der Temperatur der Verbrennungsgase, die an die Entspannungsturbine geführt werden. Insofern kann also während des Betreibens der Mittel für eine hydraulische Spalteinstellung gleichzeitig der Wirkungsgrad der Gasturbine erhöht werden, nachdem durch eine Erhöhung der Temperatur der Verbrennungsgase auch eine Erhöhung der Turbinenaustrittstemperatur die Folge ist. Erfindungswesentlich ist hierbei, dass dieser Betrieb lediglich bei Teillast erfolgt, da so eine Überfeuerung und damit eine Übersteigung der maximal zulässigen Turbineneintrittstemperaturen erfolgen kann. Da jedoch die Mittel für die hydraulische Spalteinstellung typischerweise während des Hochfahrens einer Gasturbine, also in einem Teillastbetrieb, aktiv sind, kann durch die Kombination beider Verfahrensschritte ein besonders effizienter Gasturbinenbetrieb gewährleistet werden.

Gemäß einer ersten besonders bevorzugten Ausführungsform des erfindungsgemäßen Verfahrens ist vorgesehen, dass während oder nach der Erhöhung der Brennstoffzufuhr eine Leitschaufelverstelleinrichtung der Gasturbine derart eingestellt wird, dass die Temperatur der Verbrennungsgase zusätzlich erhöht wird. Die Leitschaufelverstelleinrichtung erlaubt hierbei die Einstellung des von der Gasturbine angesogenen Massenstroms an Luft einzustellen, indem die von der Leitschaufelverstelleinrichtung umfassten Leitschaufeln in ihrer axialen Anstellung vorteilhaft eingestellt werden. Ausführungsgemäß kann so bspw. die Leitschaufelverstelleinrichtung einen verhältnismäßig geringeren Massenstrom einstellen, wodurch die Verbrennung in der Brennkammer zunehmend fetter wird. Dadurch erhöhen sich jedoch auch die Temperaturen der Verbrennungsgase, die an die Entspannungsturbine geführt werden. Die Verstellung der Leitschaufelverstelleinrichtung ist also eine effiziente unterstützende Maßnahme zur Erhöhung der Gasturbinenleistung bei Betrieb der Mittel für eine hydraulische Spalteinstellung.

Gemäß eines weiteren besonders vorteilhaften Aspekts des erfindungsgemäßen Verfahrens ist vorgesehen, dass ein weiterer Schritt umfasst ist. Dieser Verfahrensschritt ist: messtechnisches Erfassen eines physikalischen Betriebsparameters, der mit der Temperatur der Verbrennungsgase zu deren Bestimmung korreliert ist, und Veranlassen der Erhöhung der Brennstoffzufuhr an den Brenner, wenn der erfasste Wert des physikalischen Betriebsparameters einen vorbestimmten Grenzwert überschreitet. Derartige geeignete physikalische Betriebsparameter können bspw. die Gasturbinenleistung oder auch die Einstellung der Leitschaufelverstelleinrichtung sein. Ebenso ist es möglich, dass als physikalischer Betriebsparameter die Abgastemperatur herangezogen wird, aus welchen sich Rückschlüsse auf die Temperatur der Verbrennungsgase bei Turbineneintritt vornehmen lassen. Erreicht also bspw. ein Wert der Turbinenaustrittstemperatur bzw. Abgastemperatur einen vorbestimmten Grenzwert (unterer Grenzwert) kann eine Veranlassung zur Erhöhung der Brennstoffzufuhr an den Brenner vorgenommen werden. Folglich kann über leicht zu bestimmende Größen das erfindungsgemäße Verfahren eingeleitet werden.

Entsprechend einer ebenfalls bevorzugten Ausführungsform des erfindungsgemäßen Verfahrens ist vorgesehen, dass die Brennstoffzufuhr an den Brenner und/oder die Einstellung der Leitschaufelverstelleinrichtung derart erfolgt, dass die Turbinenaustrittstemperatur bei Teillast unter der Turbinenaustrittstemperatur bei Nennlast liegt. Demnach kann verhindert werden, dass ein Überschreiten der maximal zulässigen Temperaturen für die Turbineneintrittstemperatur erfolgt. Insbesondere können bei Betrieb des Verfahrens der Startpunkt, der Gradient bei Änderungen bzw. der Maximalwert des physikalischen Betriebsparameters derart gewählt werden, dass ein Überfeuern der Gasturbine vermieden werden kann.

Zudem kann vorgesehen sein, dass die Erhöhung der Brennstoffzufuhr an den Brenner in Abhängigkeit der Stellung der Leitschaufelverstelleinrichtung erfolgt. Die Leitschaufelstellung kann also als Regelungsparameter bei der Brennstoffzufuhr vorgesehen sein.

Zusätzlich oder auch alternativ kann vorgesehen sein, dass die Erhöhung der Brennstoffzufuhr an den Brenner in Abhängigkeit der Umgebungstemperatur und/oder des Umgebungsdruckes erfolgt.

Nachfolgend soll die Erfindung anhand einzelner Figuren im Detail näher beschrieben werden. Hierbei ist darauf hinzuweisen, dass die Figuren lediglich schematisch zu verstehen sind, und dies keine Einschränkung hinsichtlich der Ausführbarkeit erlaubt.

Weiter wird darauf hingewiesen, dass die technischen Merkmale, die gleiche Bezugszeichen aufweisen, gleiche technische Wirkungen haben.

Zudem werden die nachfolgend dargestellten technischen Merkmale der Erfindung in beliebiger Kombination miteinander beansprucht, soweit diese Kombination die Erfindungsaufgabe lösen kann.

Hierbei zeigen:
- Figur 1: eine flussdiagrammatische Darstellung eines ersten Ausführungsbeispiels des erfindungsgemäßen Verfahrens;
- Figur 2: eine schematische Schaltansicht einer Ausführungsform einer erfindungsgemäßen stationären Gasturbine.

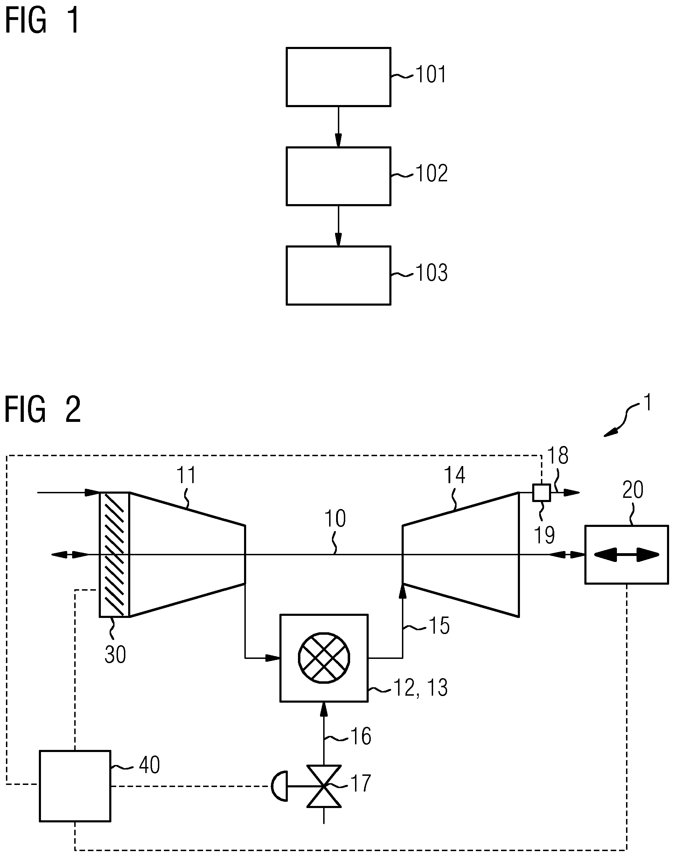

Figur 1 zeigt eine flussdiagrammatische Darstellung einer Ausführungsform des erfindungsgemäßen Verfahrens zum Betreiben einer stationären Gasturbine 1 bei Teillast, wobei die Gasturbine 1 bspw. wie in Figur 2 gezeigt, ausgebildet ist. Die Gasturbine 1 besitzt hierbei einen Verdichter 11, wenigstens eine Entspannungsturbine 14 und einen mit wenigstens einem Brenner 13 versehene Brennkammer 12 sowie Mittel 20 für eine hydraulische Spalteinstellung. Hierbei weist das ausführungsgemäße Verfahren die folgenden drei Schritte auf:
- Betreiben der Gasturbine 1 in Teillast (erster Verfahrensschritt 101);
- Betreiben der Mittel 20 für eine hydraulische Spalteinstellung (zweiter Verfahrensschritt 102);
- während des Betreibens der Mittel 20 für die hydraulische Spalteinstellung Erhöhung der Brennstoffzufuhr an den Brenner 13 unter Erhöhung der Temperatur der Verbrennungsgase 15, die an die Entspannungsturbine 14 geführt werden (dritter Verfahrensschritt 103).

Figur 2 zeigt eine Ausführungsform der erfindungsgemäßen stationären Gasturbine 1 mit Verdichter 11, Entspannungsturbine 14, sowie wenigstens einem Brenner 13, der mit einer Brennkammer 12 brenntechnisch zusammenwirkt. Weiter weist die Gasturbine 1 Mittel 20 für eine hydraulische Spalteinstellung auf, die dazu ausgebildet sind, den Gasturbinenläufer 10, welcher Verdichter 11 und Entspannungsturbine 14 mechanisch verbindet, in Axialrichtung zu verschieben.

Wie weiter oben ausgeführt, erfolgt die Verschiebung des Gasturbinenläufers 10 derart, dass die Turbinenschaufelspitzen (vorliegend nicht gezeigt) im Laufe der gewünschten Einstellung einen geringeren Spaltabstand von der inneren Gehäusewand der Entspannungsturbine 14 haben. Aufgrund der Verminderung des Spaltabstandes kommt es zu geringeren fluiddynamischen Verlusten (das Gas, welches entlang der inneren Oberfläche strömt, würde anderenfalls nicht an der Entspannungsarbeit in der Entspannungsturbine 14 teilnehmen), wodurch die Leistungsausbeute der Gasturbine 1 verbessert wird.

Wird also die Gasturbine 1 bei Teillast betrieben, wobei auch gleichzeitig die Mittel 20 für eine hydraulische Spalteinstellung betrieben werden, kann die Brennstoffzufuhr an den Brenner 13 über die Brennstoffleitung 16 erhöht werden. Diese Erhöhung nimmt ausführungsgemäß eine Gasturbinenregelungseinheit 40 vor, die mit einem Brennstoffventil 17, welches in die Brennstoffleitung 16 verschalten ist, zusammenwirkt. Gleichzeitig steht die Gasturbinenregelungseinheit 40 in Kommunikation mit den Mitteln 20 für eine hydraulische Spalteinstellung, sowie mit einer Leitschaufelverstelleinrichtung 30 im Bereich des Eintritts des Verdichters 11, sowie einem Temperatursensor 19, der derart mit dem Abgasstrom der Gasturbine 1 zusammenwirkt, dass die Abgastemperatur bzw. die Turbinenaustrittstemperatur messtechnisch erfasst werden kann. Ausführungsgemäß ist der Temperatursensor 19 in eine Abgasleitung 18 geschalten, in welcher die aus der Entspannungsturbine austretenden Abgase geführt werden.

Erfasst nun die Gasturbinenregelungseinheit 40 eine Aktivierung bzw. einen Betrieb der Mittel für eine hydraulische Spalteinstellung, bzw. veranlasst die Gasturbinenregelungseinheit 40 den Betrieb der Mittel 20 für eine hydraulische Spalteinstellung, wird die Brennstoffzufuhr an den Brenner 13 durch geeignete Einstellung des Brennstoffventils in der Brennstoffleitung 16 vorgenommen. Insbesondere wird eine Erhöhung der Brennstoffzufuhr vorgenommen.

Die Veranlassung der Erhöhung der Brennstoffzufuhr an den Brenner 13 erfolgt ausführungsgemäß insbesondere dann, wenn ein physikalischer Betriebsparameter erfasst ist, der mit der Temperatur der Verbrennungsgase 15 zu deren Bestimmung korreliert ist. Insbesondere kann dies die Einstellung der Leitschaufelverstelleinrichtung 30 sein, bzw. die Abgastemperatur, welche mittels des Temperatursensors 19 in der Abgasleitung 18 erfasst wird.

Gemäß einer alternativen Ausführungsform der Erfindung kann auch vorgesehen sein, dass die Leitschaufelverstelleinrichtung der Gasturbine 1 während des Betriebs der Mittel 20 zur hydraulischen Spalteinstellung zusätzlich eingestellt wird. Auch diese Änderung kann bspw. über die Gasturbinenregelungseinheit 40 regelungstechnisch bzw. steuerungstechnisch veranlasst werden.

Ausführungsgemäß kann die Gasturbinenregelungseinheit 40 auch als Gasturbinensteuerungseinheit 40 ausgebildet sein. Beide Formen der Einstellung sollen von der Gasturbinenregelungseinheit 40 mit umfasst sein.

Weitere Ausführungsformen ergeben sich aus den Unteransprüchen.

## Patentansprüche

1. Verfahren zum Betreiben einer stationären Gasturbine (1) bei Teillast mit wenigstens einem Verdichter (11), wenigstens einer Entspannungsturbine (14) und einer mit wenigstens einem Brenner (13) versehenen Brennkammer (12), welche Gasturbine (1) fernerhin Mittel (20) für eine hydraulische Spalteinstellung umfasst, wobei,das Verfahren folgende Schritte aufweist:
- Betreiben der Gasturbine (1) in Teillast;
- Betreiben der Mittel (20) für eine hydraulische Spalteinstellung derart, dass die Turbinenschaufelspitzen der Entspannungsturbine (14) im Laufe der gewünschten Einstellung einen geringeren Spaltabstand von der inneren Gehäusewand der Entspannungsturbine 14 haben;
- während des Betreibens der Mittel (20) für die hydraulische Spalteinstellung Erhöhung der Brennstoffzufuhr an den Brenner (13) unter Erhöhung der Temperatur der Verbrennungsgase (15), die an die Entspannungsturbine (14) geführt werden, wobei insbesondere die Temperatur unterhalb einer vorbestimmten, oberen Temperaturgrenze für den Nennlastbetrieb liegt.

2. Verfahren nach Anspruch 1,
**dadurch gekennzeichnet, dass**
während oder nach der Erhöhung der Brennstoffzufuhr eine Leitschaufelverstelleinrichtung (30) der Gasturbine (1) derart eingestellt wird, dass die Temperatur der Verbrennungsgase (15) zusätzlich erhöht wird.

3. Verfahren nach einem der Ansprüche 1 oder 2,
**dadurch gekennzeichnet, dass**
weiterhin folgender Schritt umfasst ist:
messtechnisches Erfassen eines physikalischen Betriebsparameters, der mit der Temperatur der Verbrennungsgase (15) zu deren Bestimmung korreliert ist, und Veranlassen der Erhöhung der Brennstoffzufuhr an den Brenner (13), wenn der erfasste Wert des physikalischen Betriebsparameters einen vorbestimmten Grenzwert überschreitet.

4. Verfahren nach einem der vorhergehenden Ansprüche 2 oder 3,
**dadurch gekennzeichnet, dass**
die Brennstoffzufuhr an den Brenner (13) und/oder die Einstellung der Leitschaufelverstelleinrichtung (30) derart erfolgt, dass die Turbinenaustrittstemperatur bei Teillast unter der Turbinenaustrittstemperatur bei Nennlast liegt.

5. Verfahren nach einem der vorhergehenden Ansprüche,
**dadurch gekennzeichnet, dass**
die Erhöhung der Brennstoffzufuhr an den Brenner (13) in Abhängigkeit der Stellung der Leitschaufelverstelleinrichtung (30) erfolgt.

6. Verfahren nach einem der vorhergehenden Ansprüche,
**dadurch gekennzeichnet, dass**
die Erhöhung der Brennstoffzufuhr an den Brenner (13) in Abhängigkeit der Umgebungstemperatur und/oder des Umgebungsdruckes erfolgt.

7. Stationäre Gasturbine (1) mit wenigstens einem Verdichter '(11), wenigstens einer Entspannungsturbine (14) und einer mit wenigstens einem Brenner (13) versehenen Brennkammer (12), welche Gasturbine (1) fernerhin Mittel (20) für eine hydraulische Spalteinstellung umfasst,
**dadurch gekennzeichnet, dass**
weiterhin eine Gasturbinenregelungseinheit (40) umfasst ist, die dazu ausgebildet ist, die Gasturbine (1) gemäß einem der vorhergehenden Verfahren zu betreiben.

## Claims

1. Method for operating a static gas turbine (1) at partial load with at least one compressor (11), at least one expansion turbine (14) and a combustion chamber (12) that is provided with at least one burner (13), which gas turbine (1) further comprises means (20) for hydraulic gap adjustment, wherein the method has the following steps:
- operating the gas turbine (1) at partial load;
- operating the means (20) for hydraulic gap adjustment such that, in the process of the desired adjustment, the turbine blade tips of the expansion turbine (14) have a smaller gap spacing with respect to the inner casing wall of the expansion turbine (14);
- while operating the means (20) for hydraulic gap adjustment, increasing the fuel supply to the burner (13), raising the temperature of the combustion gases (15) that are supplied to the expansion turbine (14), wherein in particular the temperature is below a predetermined upper temperature limit for rated load operation.

2. Method according to Claim 1,
**characterized in that**
a guide vane adjustment device (30) of the gas turbine (1) is adjusted while or after increasing the fuel supply, so as to additionally increase the temperature of the combustion gases (15).

3. Method according to either of Claims 1 and 2,
**characterized in that**
the following step is additionally included:
recording, by measurement, of a physical operating parameter which correlates with the temperature of the combustion gases (15) in order to determine the latter, and initiating the increase in the fuel supply to the burner (13) when the recorded value of the physical operating parameter exceeds a predetermined limit value.

4. Method according to either of the preceding Claims 2 and 3,
**characterized in that**
the fuel supply to the burner (13) and/or the setting of the guide vane adjustment device (30) takes place such that the turbine outlet temperature at partial load is below the turbine outlet temperature at rated load.

5. Method according to one of the preceding claims,
**characterized in that**
increasing the fuel supply to the burner (13) takes place in dependence on the setting of the guide vane adjustment device (30).

6. Method according to one of the preceding claims,
**characterized in that**
increasing the fuel supply to the burner (13) takes place in dependence on the ambient temperature and/or on the ambient pressure.

7. Static gas turbine (1) with at least one compressor (11), at least one expansion turbine (14) and a combustion chamber (12) that is provided with at least one burner (13), which gas turbine (1) further comprises means (20) for hydraulic gap adjustment,
**characterized in that**
it also comprises a gas turbine closed-loop control unit (40) that is designed to operate the gas turbine (1) according to one of the preceding methods.

## Revendications

1. Procédé pour faire fonctionner une turbine (1) à gaz fixe à charge partielle, comprenant au moins un compresseur (11), au moins une turbine (14) de détente et une chambre de combustion (12) pourvue d'au moins un brûleur (13), laquelle turbine (1) à gaz a en outre des moyens (20) de réglage de l'écartement hydraulique, le procédé ayant les stades suivants :
- on fait fonctionner la turbine (1) à gaz en charge partielle;
- on fait fonctionner les moyens (20) de réglage de l'écartement hydraulique, de manière à ce que les pointes d'aube de la turbine (14) de détente aient, au cours du réglage souhaité, une distance d'écartement plus petite à la paroi intérieure d'enveloppe de la turbine (14) de détente;
- pendant le fonctionnement des moyens (20) de réglage de l'écartement hydraulique, on augmente l'apport de combustible au brûleur (13) en élevant la température des gaz (15) de combustion, qui sont envoyés à la turbine (14) de détente, dans lequel, notamment la température est inférieure à une limite de température supérieure définie à l'avance pour le fonctionnement en charge nominale.

2. Procédé suivant la revendication 1,
**caractérisé en ce que**
pendant ou après l'augmentation de l'apport de combustible, on règle un dispositif (30) de réglage d'aube directrice de la turbine (1) à gaz, de manière à élever supplémentairement la température des gaz (15) de combustion.

3. Procédé suivant l'une des revendications 1 ou 2,
**caractérisé en ce que**
il y a en outre le stade suivant :
détection par technique de mesure d'un paramètre de fonctionnement physique, qui est corrélé à la température des gaz (15) de combustion pour sa détermination, et déclenchement de l'augmentation de l'apport de combustible au brûleur (13), si la valeur détectée du paramètre de fonctionnement physique dépasse une valeur limite définie à l'avance.

4. Procédé suivant l'une des revendications précédentes 2 ou 3,
**caractérisé en ce que**
l'apport de combustible au brûleur (13) et/ou le réglage du dispositif (30) de réglage d'aube directrice s'effectue de manière à ce que la température de sortie de la turbine en charge partielle soit inférieure à la température de sortie de la turbine en charge nominale.

5. Procédé suivant l'une des revendications précédentes,
**caractérisé en ce que**
l'augmentation de l'apport de combustible au brûleur (13) s'effectue en fonction de la position du dispositif (30) de réglage d'aube directrice.

6. Procédé suivant l'une des revendications précédentes,
**caractérisé en ce que**
l'augmentation d'apport de combustible au brûleur (13) s'effectue en fonction de la température ambiante et/ou de la pression ambiante.

7. Turbine (1) à gaz fixe ayant au moins un compresseur (11), au moins une turbine (14) de détente et une chambre de combustion (12) pourvue d'au moins un brûleur (13), laquelle turbine (1) à gaz comprend en outre des moyens (20) de réglage de l'écartement hydraulique,
**caractérisé en ce**
**qu'**il y a en outre une unité (40) de régulation de la turbine à gaz constituée pour faire fonctionner la turbine (1) à gaz suivant l'un des procédés précédents.
